# EUROPEAN PATENT APPLICATION

(11) **EP 4 068 498 A1**
(43) Date of publication of application: **05.10.2022**
(21) Application number: 21857244.4
(22) Date of filing: 13.05.2021
(51) Int. Cl.: H01M 50/588, H01M 50/593, H01M 50/543, H01M 50/204, H01M 50/249, H01M 50/258, H01M 50/244

(54) **BATTERY AND ELECTRICAL DEVICE**

(30) Priority: 21.08.2020 CN 202021767491 U
(71) Applicant: Contemporary Amperex Technology Co., Limited, Fujian PRC 352100 (CN)
(72) Inventor: YANG, Haiqi, Ningde, Fujian 352100 (CN); ZHENG, Minjie, Ningde, Fujian 352100 (CN); HUANG, Xiaoteng, Ningde, Fujian 352100 (CN); WU, Xingyuan, Ningde, Fujian 352100 (CN); HONG, Jiarong, Ningde, Fujian 352100 (CN)
(74) Representative: Rowlands, Stuart Michael
(86) International application number: PCT/CN2021/093694
(87) International publication number: WO 2022/037143

(57) **Abstract**

A battery (100) and an electrical device. The battery comprises battery cells (10), thermal management devices (30), and insulating components (20); the thermal management devices (30) and the insulating components (20) are respectively disposed on the battery cells (10); the battery cells (10) are provided with electrode terminals (11); the insulating components (20) are connected to the electrode terminals (11); and the insulating components (20) isolate the electrode terminals (11) from the thermal management devices (30), so as to prevent effect of condensed water produced during the operation of the thermal management devices (30) on the electrode terminals (11), thereby improving the safety of the battery (100).

## Description

This application claims priority to Chinese Patent Application No. 202021767491.X, filed with the China National Intellectual Property Administration on August 21, 2020 and entitled "BATTERY AND ELECTRIC DEVICE", which is incorporated herein by reference in its entirety.

### TECHNICAL FIELD

This application relates to the field of battery power technologies, and in particular, to a battery and an electric device.

### BACKGROUND

With the development of new energy technologies, energy density of batteries is getting higher and higher, and the application range of batteries is becoming wider and wider. Batteries are extremely sensitive to temperature. When the temperature is excessively low, the electrolyte of the battery stagnates, with condensation formed at the electrodes of the battery, which affects the charging and discharging capacity of the battery. When the temperature is excessively high, the electrolyte of the battery is highly reactive and easy to burn. In order to accurately control the temperature of a battery, a thermal management apparatus is usually installed on a top cover of the battery. The thermal management apparatus is configured to cool down the battery when the battery temperature is excessively high, and heat up the battery when the battery temperature is excessively low. This is to ensure that the battery operates at a predetermined temperature, avoiding excessively high or excessively low battery temperatures.

During implementation of this application, the inventors of this application have found that it is easy to produce condensed water on the surface of the thermal management apparatus when the thermal management apparatus is cooling down the battery. Therefore, it is necessary to solve safety problems caused by the condensed water.

### SUMMARY

To resolve the foregoing technical issue, embodiments of this application provide a battery and an electric device, to avoid battery insulation failure caused by condensed water.

The following technical solutions are adopted for the embodiments of this application to resolve the technical issue:
According to a first aspect, a battery is provided, including: a battery cell, a thermal management apparatus and an insulation assembly. The battery cell is provided with an electrode terminal, the thermal management apparatus is disposed on the battery cell and configured to implement temperature control for the battery cell, the insulation assembly is disposed on the battery cell and is connected to the electrode terminal, and the insulation assembly is configured to insulate the thermal management apparatus from the electrode terminal.

In some embodiments, the battery cell is provided in plurality, and each of the battery cells includes a cover plate. The electrode terminal is disposed on the cover plate, and the thermal management apparatus is configured to fit to the cover plate.

In some embodiments, each of the battery cells has at least two electrode terminals, and the thermal management apparatus is disposed between at least two of the electrode terminals.

In some embodiments, the insulation assembly includes a water separator and the water separator fits around the electrode terminal.

In some embodiments, a quantity of the water separators is the same as that of the electrode terminals, and each of the water separators fits around an outer circumference of a corresponding one of the electrode terminals.

In some embodiments, the insulation assembly further includes an isolation plate, where the isolation plate is provided with a through hole, the isolation plate is disposed on the water separator, the isolation plate is configured to fix the water separator to the battery cell, and the through hole is configured for passage of the electrode terminal.

In some embodiments, an installation groove is provided on a side of the isolation plate facing the battery cell, and the water separator is disposed inside the installation groove.

In some embodiments, the water separator is foam.

In some embodiments, a sprayed insulation layer is provided on a surface of the thermal management apparatus.

In some embodiments, a thermally conductive adhesive is disposed between the thermal management apparatus and the battery cell.

In some embodiments, the battery cell is provided with an explosion-proof valve, and the thermal management apparatus covers at least part of the explosion-proof valve; the battery further includes an adhesive separator, where the adhesive separator is disposed between the battery cell and the thermal management apparatus, and the adhesive separator is configured to prevent the thermally conductive adhesive from entering the explosion-proof valve.

According to a second aspect, an electric device is provided, including the battery according to any one of the foregoing embodiments.

Compared with the prior art, the battery cell provided in the embodiments of this application is provided with an insulation assembly, the insulation assembly is connected to the electrode terminal, and the insulation assembly isolates the electrode terminal from the thermal management apparatus, thus avoiding impact on the electrode terminal by condensed water produced during operation of the thermal management apparatus, which improves safety of the battery.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and a person of ordinary skill in the art may still derive other drawings from these accompanying drawings without creative efforts.
FIG. 1 is a schematic structural diagram of an electric device according to an embodiment of this application;
FIG. 2 is a schematic structural diagram of a battery for the electric device shown in FIG. 1;
FIG. 3 is an exploded view of the structure of the battery shown in FIG. 2;
FIG. 4 is a schematic diagram of a battery cell of the battery shown in FIG. 2;
FIG. 5 is a schematic structural diagram of an insulation assembly of the battery shown in FIG. 2;
FIG. 6 is a schematic structural diagram of a thermal management apparatus of the battery shown in FIG. 2;
FIG. 7 is a cross-sectional diagram of part of the battery shown in FIG. 2 in direction A, with some components omitted;
FIG. 8 is a schematic structural diagram of the battery cell and thermal management apparatus of the battery shown in FIG. 2;
FIG. 9 is a schematic structural diagram of a battery according to another embodiment of this application;
FIG. 10 is an exploded view of the structure of the battery shown in FIG. 9; and
FIG. 11 is a schematic structural diagram of an insulation assembly, a bus bar and a circuit board of the battery shown in FIG. 10.

Reference signs are described as follows:
100. battery
   10. battery cell
      11. electrode terminal
      12. cover plate
      13. housing
      14. explosion-proof valve
   20. insulation assembly
      21. water separator
      22. isolation plate
         222. through hole
         224. installation groove
         226. accommodating groove
   30. thermal management apparatus
      31. cooling plate
      32. connector
   50. adhesive separator
      51. retaining sleeve
   60. bus bar
   70. circuit board
   80. end plate
200. controller
300. motor
400. vehicle

### DETAILED DESCRIPTION OF EMBODIMENTS

For ease of understanding this application, the following further describes this application in detail with reference to the accompanying drawings and specific embodiments. It should be noted that when a component is referred to as being "fixed to" or "mounted to" another component, it may be directly fixed to the another component, or there may be one or more components in between. When a component is deemed as being "connected to" another component, it may be directly connected to the another component, or there may be one or more components in between. In the descriptions of this application, the orientations or positional relationships indicated by the terms "up", "down", "inside", "outside", "perpendicular", "horizontal", and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. In addition, the terms "first" and "second" are merely intended for a purpose of description, and shall not be understood as an indication or implication of relative importance.

Unless otherwise defined, all technical and scientific terms used herein shall have the same meanings as commonly understood by those skilled in the art to which this application belongs. The terms used in the specification of this application are merely intended to describe specific embodiments but not to constitute any limitation on this application. The term "and/or" used herein includes any and all combinations of one or more associated items that are listed.

In addition, technical features involved in different embodiments of this application that are described below may be combined as long as they do not conflict with each other.

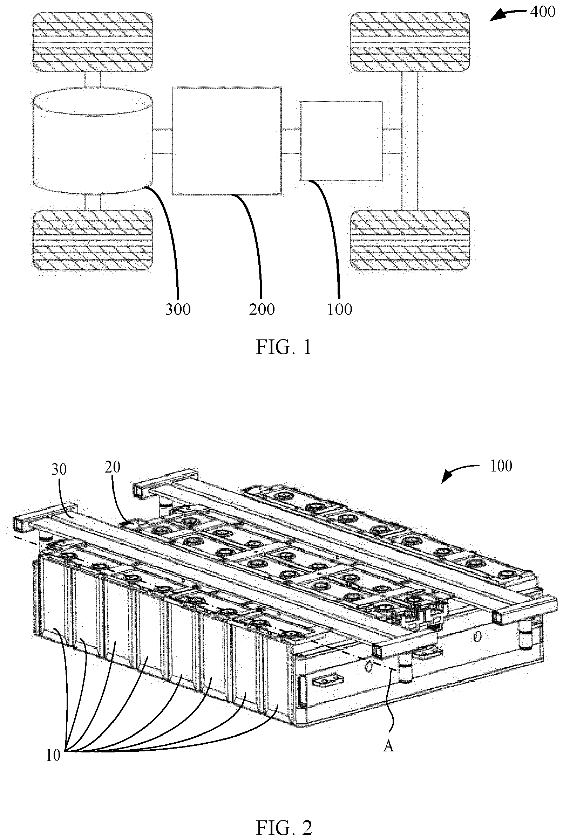

Referring to FIG. 1, an embodiment of this application provides an electric device, including a battery 100, where the battery 100 is configured to provide power for the electric device. The electric device may be a ship, an aircraft, a vehicle, or the like, where the vehicle may be a fossil-fueled vehicle, a gas-powered vehicle, or a new energy vehicle. The new energy vehicle may be a battery electric vehicle, a hybrid electric vehicle, an extended-range electric vehicle, or the like. The electric device being a vehicle 400 is used as an example for the following description.

The vehicle 400 is provided with a battery 100 inside, the battery 100 may be disposed at the bottom or in the front or at the rear of the vehicle 400, and the battery 100 is configured to power the vehicle 400. The battery 100 may be used as an operational power source for the vehicle 400 or used as a driving power source for the vehicle 400, to totally or partially replace fossil fuel or natural gas to provide driving power for the vehicle 400. In addition, the vehicle 400 may further include a controller 200 and a motor 300, the battery 100, the controller 200 and the motor 300 are connected in turn, and the controller 200 is configured to control the battery 100 that supplies power for the motor 300, so as to satisfy operating power needs during the start, navigation and driving of the vehicle 400.

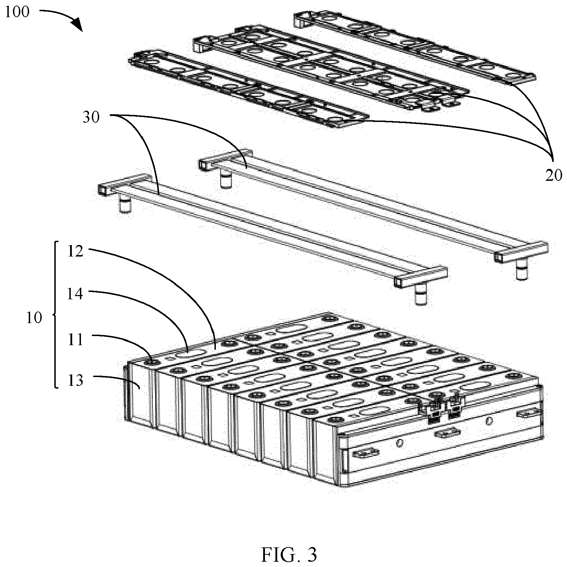

Referring to FIG. 2 and FIG. 3, the battery 100 includes: a battery cell 10, an insulation assembly 20 and a thermal management apparatus 30. The insulation assembly 20 and the thermal management apparatus 30 are disposed on the battery cell 10. The thermal management apparatus 30 is configured to implement temperature management on the battery cell 10, for example, to cool down the battery when the battery temperature is excessively high and heat up the battery when the battery temperature is excessively low. In cooling down the battery cell 10, the thermal management apparatus 30 produces condensed water due to temperature difference. The insulation assembly 20 is configured to insulate the battery cell 10 from the thermal management apparatus 30, to prevent the condensed water from flowing to the electrode terminal 11 of the battery cell 10, which causes the electrode terminal 11 and the thermal management apparatus 30 to be conductively connected or causes two or more electrode terminals 11 to be conductively connected, thus avoiding safety issues and ensuring safe use of the battery 100.

In some embodiments, the battery cell 10 is provided in plurality and the plurality of battery cells 10 are disposed side by side. The thermal management apparatus 30 implements temperature management on the plurality of battery cells 10. The insulation assembly 20 is configured to insulate the plurality of battery cells 10 from the thermal management apparatus 30. Certainly, to implement better temperature management on the plurality of battery cells 10 and maintain insulation between the thermal management apparatus 30 and the plurality of battery cells 10, the plurality of battery cells 10 may be arranged in a plurality of rows. Correspondingly, the insulation assembly 20 may also be provided in plurality. Each row of battery cells 10 is provided with one or more insulation assemblies 20 that are configured to insulate the electrode terminals 11 of that row of battery cells 10 from the thermal management apparatus 30. One thermal management apparatus 30 may be provided, and the one thermal management apparatus 30 may implement temperature management on a plurality of rows of battery cells 10 simultaneously, or the thermal management apparatus 30 may be provided in plurality, and each of the thermal management apparatuses 30 implements temperature management on one row of battery cells 10. Referring to FIG. 1, an example is used for description where there are two rows of battery cells 10, two thermal management apparatuses 30, and two insulation assemblies 20.

The plurality of battery cells 10 are arranged into two battery units. The two battery units are arranged along a first direction and abut against each other. The plurality of battery cells 10 in each battery unit are arranged along a second direction, and the plurality of battery cells 10 abut against each other in turn and are electrically connected. Each of the battery cells 10 is provided with two corresponding insulation assemblies 20 and one corresponding thermal management apparatus 30, with the thermal management apparatus 30 disposed between the two insulation assemblies 20. The first direction and the second direction are perpendicular to each other.

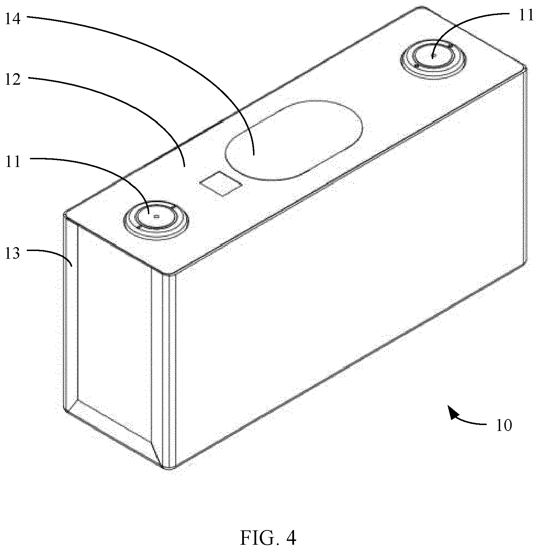

Referring to FIG. 2 to FIG 4, each of the battery cells 10 includes a cell (not shown in the figure), a cell enclosure and an electrode terminal 11. The cell enclosure includes a cover plate 12 and a housing 13. The housing 13 is provided with an accommodating space (not shown in the figure). The cell is accommodated in the accommodating space. The cover plate 12 covers the housing 13 and the cover plate 12 is placed above the cell. The electrode terminal 11 is provided on the cover plate 12 and the electrode terminal 11 is electrically connected to the cell. The electrode terminal 11 is connected to the insulation assembly 20, and the cover plate 12 fits to the thermal management apparatus 30. The thermal management apparatus 30 exchanges heat with the battery cell 10 via the cover plate 12, so as to implement temperature management on the battery cell 10.

In this embodiment, each of the battery cells 10 is provided with two electrode terminals 11. The two electrode terminals 11 are disposed on two sides of the cover plate 12, respectively, and the two electrode terminals 11 are electrically connected to the cell. In the two electrode terminals 11, one electrode terminal 11 is a positive electrode, and the other electrode terminal 11 is a negative terminal. When the thermal management apparatus 30 is installed on a plurality of battery cells 10, the thermal management apparatus 30 is disposed between the two electrode terminals 11 of each of the battery cells 10. It can be understood that, in some other embodiments, the quantity of electrode terminals in each battery cell may be increased according to the actual demand, for example, three or four electrode terminals being provided, as long as it is ensured that there are at least two electrode terminals and the thermal management apparatus 30 is disposed between at least two of the electrode terminals 11.

Each of the battery cells 10 is provide with an explosion-proof valve 14. The explosion-proof valve 14 is disposed between two electrode terminals 11. The valve opening of the explosion-proof valve 14 is disposed at the cover plate 12. When the cell is experiencing thermal runaway, a large amount of high-temperature and high-pressure gas will be produced. The high-temperature and high-pressure gas produced during the thermal runaway may pierce the explosion-proof valve 14 to be discharged to the outside of the battery cell 10, so as to avoid an explosion of the battery cell 10 due to accumulation of a large amount of high-temperature and high-pressure gas inside the battery cell 10 in a short period of time.

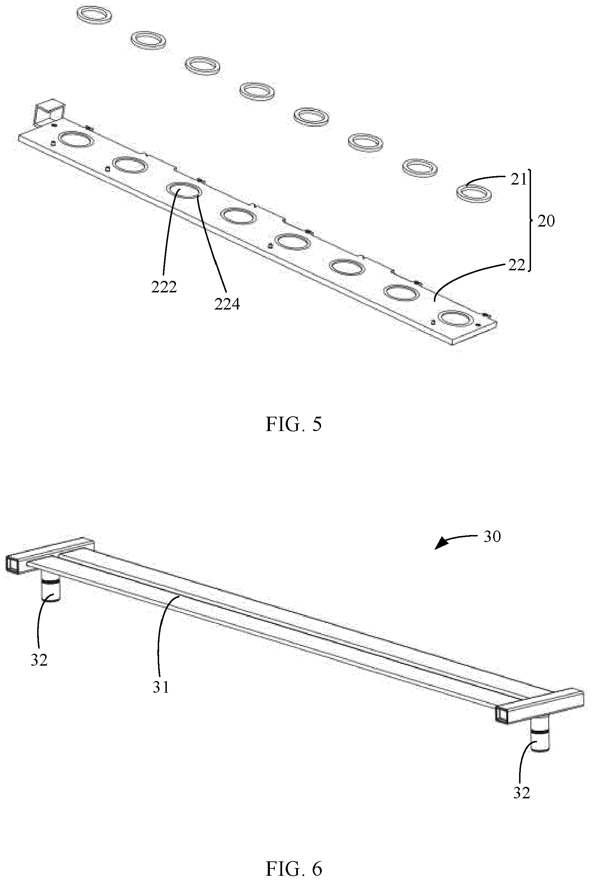

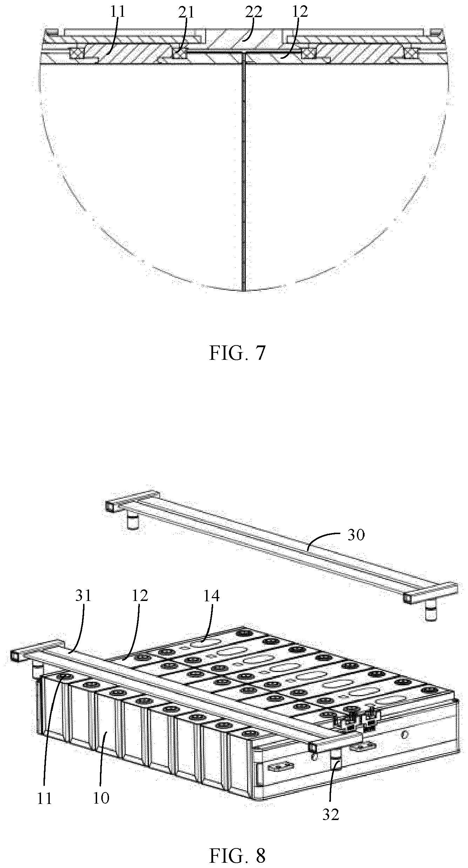

Referring to FIG. 5 and FIG. 7, the insulation assembly 20 includes a water separator 21. The water separator 21 has a ring structure. The water separator 21 fits around the electrode terminal 11 and abuts against the cover plate 12. The water separator 21 is configured to prevent the condensed water from contacting the electrode terminal 11. In this embodiment, a quantity of the water separators 21 is the same as that of the electrode terminals 11, and each of the water separators 21 fits around an outer circumference of a corresponding one of the electrode terminals 11. The water separator 21 may be made of foam, rubber, plastic, silicone, or the like. In this embodiment, the water separator 21 is made of foam which has advantages of buffering, earthquake resistance, heat insulation, moisture resistance and chemical corrosion resistance. It can be understood that, in some other embodiments, the quantity of water separators 21 may be determined according to the actual demand. Each of the water separators 21 may correspond to two or more electrode terminals 11. For example, two water separators 21 are provided, and each of the water separators 21 fits around a plurality of electrode terminals 11 that are on a same side. Such configuration can simplify the assembling process of the insulation assembly 20 and improve the efficiency of mounting the insulation assembly 20 to the battery cell 10.

In some embodiments, the insulation assembly 20 further includes an isolation plate 22. The isolation plate 22 is disposed on the water separator 21. The isolation plate 22 is configured to fix the water separator 21 to the cover plate 12, to ensure that the water separator 21 is in close contact with the cover plate 12, so as to effectively avoid contact between the condensed water and the electrode terminal 11.

Specifically, the isolation plate 22 is provided with a through hole 222 and the through hole 222 runs through the isolation plate 22. The isolation plate 22 is installed on the cover plate 12. The through hole 222 is configured for passage of the electrode terminal 11. In some embodiments, a quantity of the through holes 222 is the same as that of the electrode terminals 11, and each of the electrode terminals 11 passes through a corresponding one of the through holes 222. It can be understood that, in some other embodiments, the quantity of through holes 222 may be determined according to the actual demand, and each of the through holes 222 may correspond to two or more electrode terminals 11, provided that assembling of the insulation assembly 20 and the electrode terminals 11 are guaranteed. For example, only one through hole 222 is provided in the isolation plate 22 and a plurality of electrode terminals 11 pass through the one through hole 222.

An installation groove 224 is provided on a side of the isolation plate 22 facing the cover plate 12. The installation groove 224 is configured for installing the water separator 21. In this embodiment a quantity of the installation grooves 224 is the same as that of the water separators 21, and each of the water separators 21 is disposed in a corresponding one of the installation grooves 224. It can be understood that, in some other embodiments, the quantity of installation grooves 224 may be determined according to the actual demand and each of the installation grooves 224 may correspond to two or more water separators 21, provided that assembling of the isolation plate 22 and the water separators 21 are guaranteed. For example, only one installation groove 224 is provided in the isolation plate 22 and a plurality of water separators 21 are arranged in the one installation groove 224.

For ease of installation of the insulation assembly 20, the water separator 21 may be installed in the installation groove 224 first and connected to the isolation plate 22 through bonding, hot melting, or other means, and then the water separator 21 and the isolation plate 22 are installed on the cover plate 12 together.

Referring to FIG. 6 and FIG. 8, the thermal management apparatus 30 includes a cooling plate 31, where the cooling plate 31 fits to the cover plate 12 of the battery cell 10, and the cooling plate 31 covers at least part of the explosion-proof valve 14 of the battery cell 10. The cooling plate 31 is provided with a condensation channel inside (not shown in the figure), where the condensation channel is filled with a heat transfer medium for heat exchange with the battery cell 10. Optionally, the heat transfer medium inside the cooling plate 31 has a fire extinguishing property. When the cell is experiencing thermal runaway, high-temperature and high-pressure gas can destroy the cooling plate 31, causing the heat transfer medium to flow into the battery cell 10 along the valve opening of the explosion-proof valve 14 to extinguish a fire, so as to effectively restrain the spread of the fire inside the battery cell. A substance with properties such as flame retardancy, cooling property, and heat exchange is selected as the heat transfer medium, for example, halogenated hydrocarbon, phosphate ester, or hydrofluoroether. In this embodiment, the heat transfer medium is fluorinated liquid, in order to quickly eliminate fire to improve safety. The fluorinated liquid can cool down, through heat transfer by boiling, the battery cell 10 that is experiencing thermal runaway, and a large amount of gas produced in the process of phase transition of the fluorinated liquid by boiling will reduce an exhaust temperature of the battery cell 10, improving the safety of the battery. In addition, gas produced after the phase transition of the fluorinated liquid can effectively keep the air out, further enhancing the effect of preventing the spread of fire after the occurrence of thermal runaway of the battery cell. In some embodiments, a sprayed insulation layer is provided on a surface of the cooling plate 31 (not shown in the figure), to further insulate the thermal management apparatus 30 from the battery cell 10 and reduce the possibility of corrosion of the thermal management apparatus 30.

A connector 32 is provided at both ends of the cooling plate 31. The two connectors 32 are both connected to the condensation channel and both connected to an external heat exchange medium storage apparatus, so that the heat exchange medium circulates between the condensation channel and the external heat exchange medium storage apparatus.

In some embodiments, in order to implement automation of the thermal management apparatus 30, the thermal management apparatus 30 further includes a heat exchanger (not shown in the figure), a temperature sensor (not shown in the figure) and a controller (not shown in the figure). The heat exchanger communicates with the condensation channel, and the controller is connected to the heat exchanger and the temperature sensor. The temperature sensor is installed on the battery cell 10, and configured to monitor temperature changes of the battery cell 10 and communicatively connect to the controller. When the temperature sensor detects that a temperature of the battery cell 10 is higher than preset temperature, the controller controls the heat exchanger to cool down the heat exchange medium, so that the heat exchange medium cools down the battery cell 10; when the temperature sensor detects that temperature of the battery cell 10 is lower than the preset temperature, the controller controls the heat exchanger to heat up the heat exchange medium, so that the heat exchange medium heats up the battery cell 10. In this way, the thermal management apparatus 30 implements automated temperature management on the battery cell 10.

In some embodiments, a thermally conductive adhesive (not shown in the figure) is disposed between the thermal management apparatus 30 and the battery cell 10. The thermally conductive adhesive is configured to improve the heat conductivity between the thermal management apparatus 30 and the battery cell 10. Specifically, the thermally conductive adhesive sticks between the cover plate 12 and the cooling plate 31 to improve the heat conductivity between the cover plate 12 and the cooling plate 31 while also ensuring a stable connection between the cooling plate 31 and the cover plate 12.

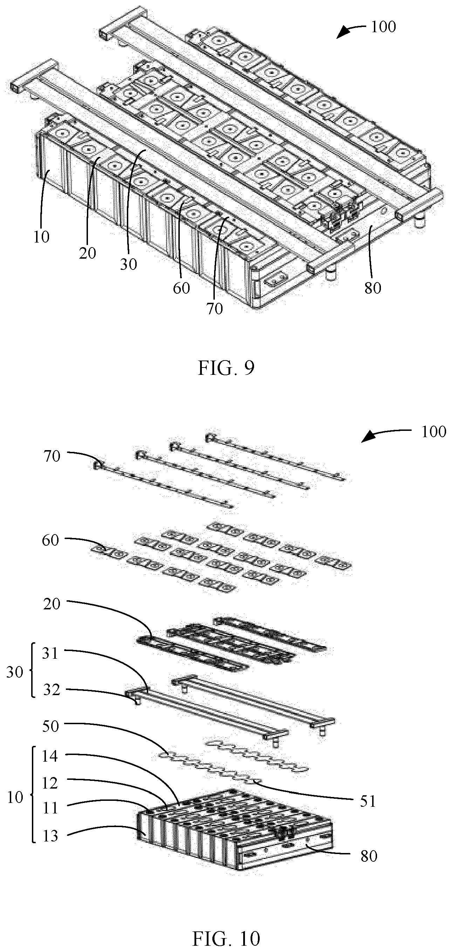

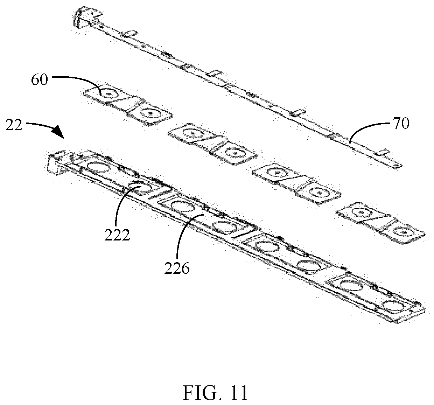

Referring to FIG. 9 to FIG. 11, in some other embodiments, the battery 100 further includes an adhesive separator (50). The adhesive separator (50) is disposed between the battery cell 10 and the thermal management apparatus 30, and is configured to prevent the explosion-proof valve 14 from being blocked due to the thermally conductive adhesive entering the explosion-proof valve 14, so as to ensure smooth discharge of gas. Specifically, the adhesive separator (50) is disposed between the cover plate 12 and the cooling plate 31. The adhesive separator (50) is disposed around the explosion-proof valve 14. The thermally conductive adhesive is disposed on an outer circumference of the adhesive separator (50).

In some embodiments, the adhesive separator (50) includes a retaining sleeve 51. The retaining sleeve 51 is provided in plurality and the plurality of retaining sleeves 51 are connected in turn. A quantity of the retaining sleeves 51 is the same as that of the explosion-proof valves 14. Each of the retaining sleeves 51 fits around a corresponding one of the explosion-proof valves 14. It can be understood that, in some other embodiments, the plurality of retaining sleeves 51 of the adhesive separator (50) may not be connected, and the quantity of retaining sleeves 51 on each adhesive separator (50) may be determined according to the actual demand, and each of the retaining sleeves 51 may correspond to two or more explosion-proof valves 14, provided that the thermally conductive adhesive is prevented from blocking the explosion-proof valve 14. For example, the adhesive separator 50 is provided with only one retaining sleeve 51 which surrounds the plurality of explosion-proof valves 14 of the battery cell.

In some embodiments, the battery 100 further includes a bus bar 60. The bus bar 60 is disposed on the insulation assembly 20, and the bus bar 60 is connected to the battery cell 10. The bus bar 60 is provided in plurality, and each of the bus bars 60 corresponds to two electrode terminals 11. Each of the bus bars 60 is connected to electrode terminals 11 of two adjacent battery cells 10, to make the two battery cells 10 electrically connected.

In some embodiments, the bus bar 60 is installed on the insulation assembly 20 for convenience. An accommodating groove 226 is also provided on a side of the isolation plate 22 facing away from the battery cell 10. The accommodating groove 226 is connected to the through hole 222, and the bus bar 60 is installed inside the accommodating groove 226. The bus bar 60 is welded to the electrode terminals 11 and fixes the isolation plate 22 to the battery cell 10.

In some embodiments, the battery 100 further includes a circuit board 70. The circuit board 70 is connected to the plurality of bus bars 60, to make the plurality of battery cells 10 electrically connected. Optionally, the circuit board 70 is a flexible printed circuit board, small in volume and easy to arrange.

In some embodiments, the battery 100 further includes an end plate 80. Two end plates 80 are provided. The two end plates 80 are disposed on two ends of the plurality of battery cells 10 respectively, and two end plates 80 are configured to fix the plurality of battery cells 10.

Finally, it should be noted that the foregoing embodiments are merely intended to describe the technical solutions of this application, and are not intended to limit this application. Under the idea of this application, the foregoing embodiments or the technical features in different embodiments may also be combined, the steps may be implemented in any order, and there are many other changes in different aspects of this application as described above, which, for the sake of brevity, are not provided in detail. Although this application is described in detail with reference to the foregoing embodiments, persons of ordinary skill in the art should understand that modifications may be made to the technical solutions described in the foregoing embodiments, or equivalent substitutions may be made to some technical features therein, and these modifications or substitutions do not make the essence of the corresponding technical solutions depart from the scope of the technical solutions of the embodiments of this application.

## Claims

1. A battery, comprising:
a battery cell (10), wherein the battery cell (10) is provided with an electrode terminal (11);
a thermal management apparatus (30), wherein the thermal management apparatus (30) is disposed on the battery cell (10) and is configured to implement temperature control for the battery cell (10); and
an insulation assembly (20), wherein the insulation assembly (20) is disposed on the battery cell (10) and is connected to the electrode terminal (11), and the insulation assembly (20) is configured to insulate the thermal management apparatus (30) from the electrode terminal (11).

2. The battery according to claim 1, wherein the battery cell (10) is provided in plurality, and each of the battery cells (10) comprises a cover plate (12); and
the electrode terminal (11) is disposed on the cover plate (12), and the thermal management apparatus (30) is configured to fit to the cover plate (12).

3. The battery according to claim 2, wherein each of the battery cells (10) has at least two electrode terminals (11), and the thermal management apparatus (30) is disposed between at least two of the electrode terminals (11).

4. The battery according to any one of claims 1 to 3, wherein the insulation assembly (20) comprises a water separator (21), and the water separator (21) fits around the electrode terminal (11).

5. The battery according to claim 4, wherein a quantity of the water separators (21) is the same as that of the electrode terminals (11), and each of the water separators (21) fits around an outer circumference of a corresponding one of the electrode terminals (11).

6. The battery according to any one of claims 4 to 5, wherein the insulation assembly (20) further comprises an isolation plate (22), wherein the isolation plate (22) is provided with a through hole (222); and
the isolation plate (22) is disposed on the water separator (21), the isolation plate (22) is configured to fix the water separator (21) to the battery cell (10), and the through hole (222) is configured for passage of the electrode terminal (11).

7. The battery according to claim 6, wherein an installation groove (224) is provided on a side of the isolation plate (22) facing the battery cell (10), and the water separator (21) is disposed inside the installation groove (224).

8. The battery according to any one of claims 4 to 7, wherein the water separator (21) is foam.

9. The battery according to any one of claims 1 to 8, wherein a sprayed insulation layer is provided on a surface of the thermal management apparatus (30).

10. The battery according to any one of claims 1 to 8, wherein a thermally conductive adhesive is provided between the thermal management apparatus (30) and the battery cell (10).

11. The battery according to claim 10, wherein the battery cell (10) is provided with an explosion-proof valve (14), and the thermal management apparatus (30) covers at least part of the explosion-proof valve (14); and
the battery further comprises an adhesive separator (50), wherein the adhesive separator (50) is disposed between the battery cell (10) and the thermal management apparatus (30), and the adhesive separator (50) is configured to prevent the thermally conductive adhesive from entering the explosion-proof valve (14).

12. An electric device, comprising the battery according to any one of claims 1 to 11.
